# EUROPÄISCHE PATENTSCHRIFT

(11) **EP 0 399 187 B1**
(45) Veröffentlichungstag und Bekanntmachung des Hinweises auf die Patenterteilung: **24.02.1993**
(21) Anmeldenummer: 90106479.0
(22) Anmeldetag: 05.04.1990
(51) Int. Cl.: B60J 3/02

(54) **Sonnenblende für Fahrzeuge**
Sun visor for vehicles
Pare-soleil pour véhicules

(30) Priorität: 22.05.1989 DE 3916625
(43) Veröffentlichungstag der Anmeldung: 28.11.1990
(73) Patentinhaber: Gebr. Happich GmbH, D-42097 Wuppertal (DE)
(72) Erfinder: Viertel, Lothar, D-6636 Altforweiler (DE); Welter, Patrick, F-57730 La Chambre (FR)

(56) Entgegenhaltungen:
- EP-A- 0 076 174
- EP-A- 0 230 915
- EP-A- 0 275 903
- DE-A- 3 704 751
- FR-A- 2 595 073
- US-A- 4 626 019

## Beschreibung

Die Erfindung bezieht sich auf eine Sonnenblende für Fahrzeuge mit einem etwa in der Mittelebene geteilten Sonnenblendenkörper, von dem zumindest eine Körperhälfte als schalenförmiges Kunststoff-Spritzgußteil ausgebildet ist, welches eine Lagerausbildung für die einendige Aufnahme einer Sonnenblendenachse und einer diese radial belastenden Feder aufweist.

Eine Sonnenblende der gattungsgemäßen Art ist durch die EP-A- 0 076 174 bekanntgeworden. Bei dieser bekannten Sonnenblende sind die Lagerausbildungen für die Sonnenblendenachse und deren axiale Festlegung, wie auch die Ausbildung und Anordnung der die Sonnenblendenachse radial belastenden Feder noch nicht optimal gelöst und daher verbesserungsbedürftig.

Der vorliegenden Erfindung liegt die Aufgabe zugrunde, eine Sonnenblende der eingangs genannten Art, insbesondere hinsichtlich der Lagerausbildung für die Sonnenblendenachse und hinsichtlich der Gestaltung und Anordnung der Feder bei einfachster Herstellungsweise und niedrigsten Fertigungskosten zu verbessern.

Diese Aufgabe wird in ebenso einfacher wie vorteilhafter und fortschrittlicher Weise erfindungsgemäß dadurch gelöst, daß die Lagerausbildung aus zwei an der Innenseite der entsprechenden Körperhälfte angeformten Materialansätzen besteht, die mit Abstand nebeneinander angeordnet sind und jeweils ein Lagerauge für die Sonnenblendenachse aufweisen, daß der Platz zwischen den Materialansätzen für die Aufnahme der Feder genutzt wird und daß die Feder eine hutförmig gestaltete Blattfeder ist, die zwei sich an der Innenseite der Körperhälfte abstützende Flansche, zwei sich daran abgewinkelt anschließende Schenkel mit Durchschlagsöffnungen für die Sonnenblendenachse und einen die Schenkel miteinander verbindenden Steg aufweist, der mit einer, in Richtung zu den Flanschen hin abgebogenen, sich an der Sonnenblendenachse anlegenden Stützfläche ausgebildet ist.

Die Anformung der Materialansätze kann, ebenso wie die Ausformung der darin vorgesehenen Lageraugen, bei der Herstellung der entsprechenden Sonnenblenden-Körperhälfte ohne besonderen Aufwand vorgesehen werden. Die miteinander fluchtenden Lageraugen bieten eine gute und wackelfreie Lagerung der Sonnenblendenachse. Die Blattfeder ist einfach zu montieren, indem sie z.B. zwischen die Materialansätze geklemmt wird. Insbesondere ist die neuartige Gestaltung der Blattfeder von Vorteil, weil hierdurch eine besonders einfache und kostengünstige Herstellbarkeit bei, den technischen Anforderungen vollauf genügende Funktionstüchtigkeit gewährleistet ist.

Obgleich es - wie erwähnt - möglich ist, die Blattfeder durch einklemmen zu halten, ist in Ausgestaltung der Erfindung bevorzugt vorgesehen, daß die Lagerausbildung einstückig angeformte Halterungselemente für die Blattfeder aufweist, womit eine unbedingt zuverlässige Vormontierbarkeit gegeben ist.

Gemäß einer weiteren, bevorzugten Ausgestaltung der Erfindung, kann ein Flansch der Blattfeder eine freigeschnittene und aus der Flanschebene herausgebogene Federzunge zum Einrasten in eine Ringnut der Sonnenblendenachse aufweisen. Hierdurch wird eine einfache, kostengünstige und zuverlässige Axialsicherung der Sonnenblendenachse in der Lagerausbildung erzielt.

Eine Weiterbildung der Erfindung sieht vor, daß die Flansche der Blattfeder jeweils einen freien, etwa parallel zur Sonnenblendenachse verlaufenden Endbereich und jeweils einen sich daran anschließenden, vom Steg weggebogenen Abschnitt aufweisen, wobei die Abschnitte über eine Abbiegung in jeweils einen Schenkel der Blattfeder übergehen. Auf diese Weise erhalten die Flansche der Blattfeder ein Federungsvermögen mit einer relativ weichen Federkennlinie.

Es kann auch vorgesehen sein, daß die Schenkel der Blattfeder in Richtung zum Steg schräg verlaufen und daß die Durchlaßöffnungen in den Schenkeln der Blattfeder langlochartig ausgebildet sind. Auch kann vorgesehen sein, daß die Stützfläche der Blattfeder sich im wesentlichen parallel zur Sonnenblendenachse erstreckt und mit einer Abflachung der Sonnenblendenachse so zusammenwirkt, daß der Sonnenblendenkörper in seiner Nichtgebrauchslage eine Rasthalterung (Endrastung) erfährt. Schließlich kann vorgesehen sein, daß die Lagerausbildung und die Blattfeder durch die zweite, vorzugsweise aus PP-Partikelschaum bestehende Sonnenblendenkörperhälfte abgedeckt sind und daß die Sonnenblendenkörperhälften gemeinsam mit einer Kunststoffolie, einem textilen Flächengebilde oder dergleichen Umhüllungsmaterial ummantelt sind.

Ein Ausführungsbeispiel der Erfindung wird nachfolgend anhand der Zeichnungen näher erläutert. Es zeigen
Fig. 1 eine perspektivische Ansicht der Sonnenblende mit separat dargestellter Sonnenblendenachse nebst Lagerböckchen,
Fig. 2 eine erste Hälfte des Sonnenblendenkörpers,
Fig. 3 eine zweite Hälfte des Sonnenblendenkörpers,
Fig. 4 einen die Sonnenblende vervollständigende, in einem Rahmen eingefaßten Spiegel,
Fig. 5 die Einzelheit X nach Fig. 2 nebst Blattfeder in einer Explosivdarstellung,
Fig. 6 einen Schnitt A-A nach Fig. 5 und
Fig. 7 einen Schnitt B-B nach Fig. 6.

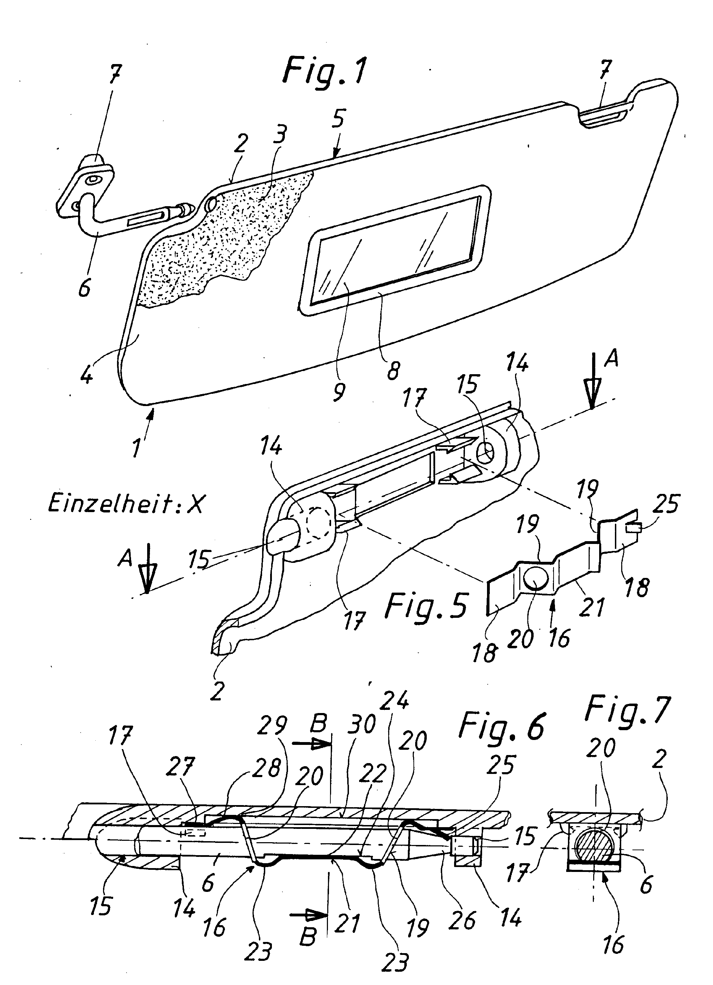

Fig. 1 zeigt einen Sonnenblendenkörper 1, im wesentlichen bestehend aus einer ersten Körpferhälfte 2 und einer zweiten Körperhälfte 3, die etwa in der Mittelebene des Sonnenblendenkörpers 1 gegeneinander gesetzt und gemeinsam mit einem Umhüllungsmaterial 4 ummantelt sind. Der Sonnenblendenkörper 1 weist eine obere Längskante 5 auf. Mit geringem Abstand von der Längskante 5 und im wesentlichen parallel dazu, verläuft eine Klappachse, um die herum der Sonnenblendenkörper 1 aus einer Ruhelage unter dem Fahrzeughimmel in eine Gebrauchslage vor der Windschutzscheibe bewegt werden kann. Die Klappachse wird durch den langen Schenkel der L-förmig ausgebildeten Sonnenblendenachse 6 (deren kurzer Schenkel im Lagerböckchen 7, das seinerseits an der Fahrzeugkarosserie zu befestigen ist, gelagert ist) und dem damit fluchtenden Gegenlagerstift 7 gebildet, wobei der Gegenlagerstift lösbar in einem an der Fahrzeugkarosserie zu befestigenden Gegenlagerböckchen (nicht gezeigt) einrastbar ist. Fig. 1 zeigt weiterhin, daß der Sonnenblendenkörper 1 auch mit einem von einem Rahmen 8 getragenen Spiegel 9 ausgerüstet sein kann. Es sei bemerkt, daß der Sonnenblendenkörper 1 ferner mit einer, hier nicht dargestellten Beleuchtung, die eine Benutzung des Spiegels auch bei Dunkelheit ermöglicht, ausgerüstet sein kann und das auch eine Abdeckung für den Spiegel in Form eines Schiebers oder Klappdeckels realisierbar ist.

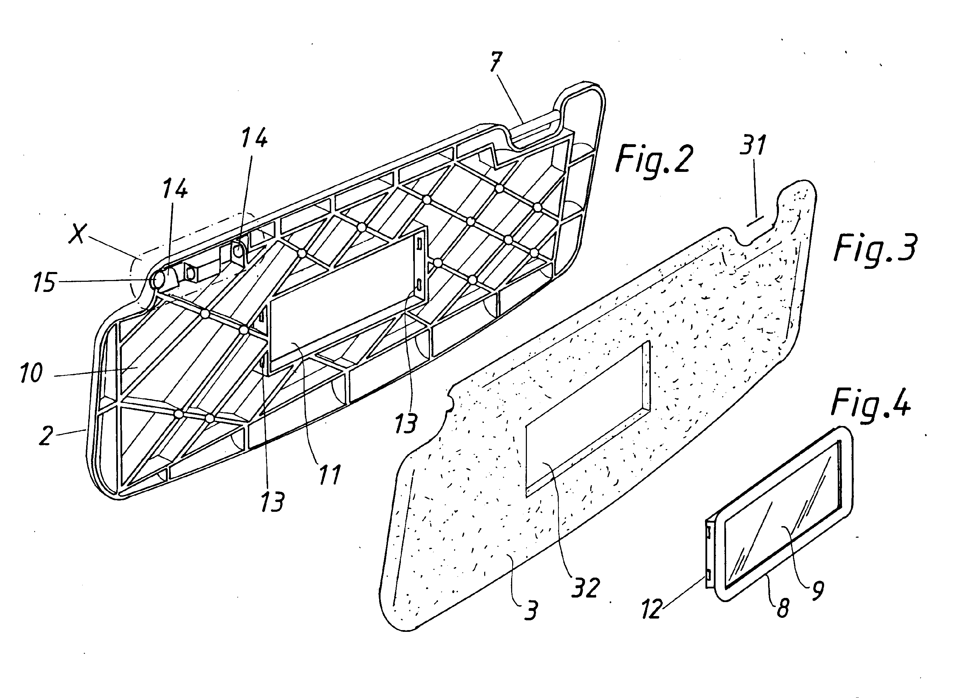

Wie Fig. 2 und die zugehörigen Detailzeichnungen (Fig. 5 bis 7) zeigen, besteht die erste Körperhälfte 2 aus einem schalenförmig ausgebildeten Kunststoffspritzgußkörper mit Versteifungsrippen 10 und einer umrahmten Aufnahmeöffnung 11 für die Aufnahme des Rahmens 8 und des Spiegels 9. Der Rahmen 8 ist mit Klipsnasen 12 ausgebildet, die in Klipsöffnungen 13 des die Aufnahmeöffnung 11 umgebenen Rahmens einzurasten vermögen. Insbesondere ist die erste Körperhälfte 2 mit einer Lagerausbildung ausgestattet, die aus zwei an der Innenseite der Körperhälfte 2 angeformten Materialansätzen 14 besteht, die mit Abstand nebeneinander angeordnet sind und jeweils ein Lagerauge 15 für die Sonnenblendenachse 6 aufweisen.

Der Platz zwischen den Materialansätzen 14 wird die Aufnahme einer die Sonnenblendenachse 6 radial belastenden Feder genutzt, die eine hutförmig gestaltete Blattfeder 16 ist. Die Blattfeder 16 wird an der Körperhälfte 2 durch Halterungselemente 17, bei denen es sich um Klipsnasen oder dergleichen handeln kann, gehalten. Die Blattfeder 16 weist zwei sich an die Innenseite der ersten Körperhälfte 2 abstützende Flansche 18, zwei sich daran abgewinkelt anschließende Schenkel 19 mit Durchlaßöffnungen 20 für die Sonnenblendenachse 6 und einen die Schenkel 19 miteinander verbindenden Steg 21 auf, der mit einer, in Richtung zu den Flanschen 18 hin abgebogenen, sich an der Sonnenblendenachse 6 anlegenden Stützfläche oder Rastfläche 22 ausgebildet ist. Vorzugsweise wird die Stützfläche 22 durch zwei Verkröpfungszonen 23 in den Übergangsbereichen der Schenkel 19 in den Steg 21 gebildet, so daß sich die Stützfläche 22 im wesentlichen parallel zur Sonnenblendenachse 6 erstreckt und mit einer Abflachung 24 der Sonnenblendenachse 6 zusammenwirkt. Ein Flansch 18 der Blattfeder 16 weist eine freigeschnittene und aus der Flanschebene herausgebogene Federzunge 25 auf, die zum Einrasten in eine Ringnut 26 der Sonnenblendenachse 6 dient, um diese in axialer Richtung zu sichern. Die Flansche 18 der Blattfeder 16 weisen jeweils einen freien, etwa parallel zur Sonnenblendenachse 6 verlaufenden Endbereich 27 und jeweils einen sich daran anschließenden, vom Steg 21 weggebogenen Abschnitt 28 auf, wobei die Abschnitte 28 über eine Abbiegung 29 in jeweils einen Schenkel 19 der Blattfeder 16 übergehen. Die Abbiegungen 29 stützen sich auf dem Boden einer Vertiefung 30 an der Innseite der ersten Körperhälfte 2 ab. Wie die Zeichnung weiterhin erkennen läßt, verlaufen die Schenkel 19 der Blattfeder 16 schräg, indem sie vom Steg 21 zu den Flanschen 18 hin divergieren. Auch ist aus der Zeichnung (vergleiche insbesondere Fig. 7) ersichtlich, daß die Durchlaßöffnungen 20 der Blattfeder 16 langlochartig ausgebildet sind.

Die zweite Körperhälfte 3 (Fig. 3) besteht aus Schaumkunststoff und ist vorzugsweise aus Polypropylen-Partikelschaum gebildet. Die Körperhälfte 3 entspricht in ihren Flächenabmessungen der Körperhälfte 2 und sie weist an ihrem oberen Rand 5 eine Aussparung 31 für den Gegenlagerstift 7 (der z.B. einstückig mit der ersten Körperhälfte 2 ausgebildet ist aber auch als Losteil nachträglich montiert werden kann) und in der Fläche einen Durchbruch 32 für die Spiegelbaueinheit 8, 9 auf.

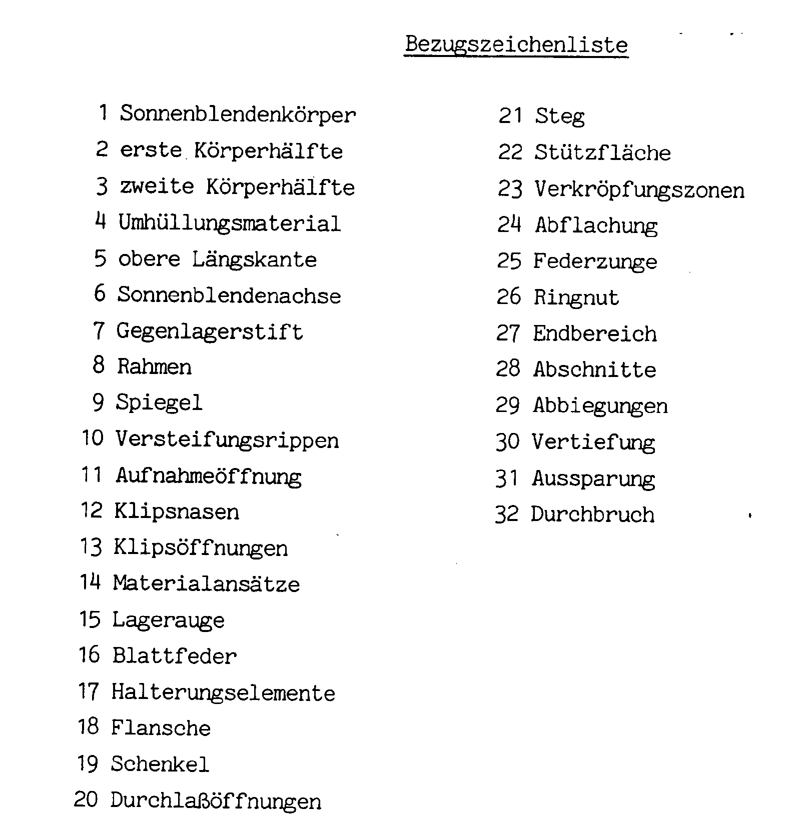

## Patentansprüche

1. Sonnenblende für Fahrzeuge mit einem etwa in der Mittelebene geteilten Sonnenblendenkörper (1), von dem zumindest eine Körperhälfte (2) als schalenförmiges Kunststoff-Spritzgußteil ausgebildet ist, welches eine Lagerausbildung für die einendige Aufnahme einer Sonnenblendenachse (6) und einer diese radial belastenden Feder (16) aufweist, dadurch gekennzeichnet, daß die Lagerausbildung aus zwei an der Innenseite der entsprechenden Körperhälfte (2) angeformten Materialansätzen (14) besteht, die mit Abstand nebeneinander angeordnet sind und jeweils ein Lagerauge (15) für die Sonnenblendenachse (6) aufweisen, daß der Platz zwischen den Materialansätzen (14) für die Aufnahme der Feder genutzt wird, und daß die Feder eine hutförmig gestaltete Blattfeder (16) ist, die zwei sich an der Innenseite der Körperhälfte (2) abstützende Flansche (18), zwei sich daran abgewinkelt anschließende Schenkel (19) mit Durchlaßöffnungen (20) für die Sonnenblendenachse (6) und einen die Schenkel (19) miteinander verbindenden Steg (21) aufweist, der mit einer, in Richtung zu den Flanschen (18) hin abgebogenen, sich an der Sonnenblendenachse (6) anlegenden Stützfläche (22) ausgebildet ist.

2. Sonnenblende nach Anspruch 1, dadurch gekennzeichnet, daß die Lagerausbildung einstückig angeformte Halterungselemente (17) für die Blattfeder (16) aufweist.

3. Sonnenblende nach Anspruch 1 oder 2, dadurch gekennzeichnet, daß ein Flansch (18) der Blattfeder (16) eine freigeschnittene und aus der Flanschebene herausgebogene Federzunge (25) zum Einrasten in eine Ringnut (26) der Sonnenblendenachse (6) aufweist.

4. Sonnenblende nach zumindest einem der Ansprüche 1 bis 3, dadurch gekennzeichnet, daß die Flansche (18) der Blattfeder (16) jeweils einen freien, etwa parallel zur Sonnenblendenachse (6) verlaufenden Endbereich (27) und jeweils einen sich daran anschließenden, vom Steg (21) weggebogenen Abschnitt (28) aufweisen, wobei die Abschnitte (28) über eine Abbiegung (29) in jeweils einen Schenkel (19) der Blattfeder (16) übergehen.

5. Sonnenblende nach zumindest einem der Ansprüche 1 bis 4, dadurch gekennzeichnet, daß die Schenkel (19) der Blattfeder (16) in Richtung zum Steg (21) schräg verlaufen und daß die Durchlaßöffnungen (20) in den Schenkeln (19) der Blattfeder (16) langlochartig ausgebildet sind.

6. Sonnenblende nach zumindest einem der Ansprüche 1 bis 5, dadurch gekennzeichnet, daß die Stützfläche (22) der Blattfeder (16) sich im wesentlichen parallel zur Sonnenblendenachse (6) erstreckt und mit einer Abflachung (24) der Sonnenblendenachse (6) so zusammenwirkt, daß der Sonnenblendenkörper (1) in seiner Nichtgebrauchslage eine Rasthalterung/Endrastung erfährt.

7. Sonnenblende nach zumindest einem der Ansprüche 1 bis 6, dadurch gekennzeichnet, daß die Lagerausbildung und die Blattfeder (16) durch die zweite, vorzugsweise aus PP-Partikelschaum bestehende Sonnenblendenkörperhälfte (3) abgedeckt sind und daß die Sonnenblendenkörperhälften (2, 3) gemeinsam mit einer Kunststoffolie, einem textilen Flächengebilde oder dergleichen Umhüllungsmaterial (4) ummantelt sind.

## Claims

1. A sun visor for vehicles comprising a sun-visor body (1) divided approximately in the central plane, at least one half-member (2) thereof being a dish-like plastics injection-moulded part which comprises a bearing structure for receiving one end of a sun-visor shaft (6) and a spring (16) radially biasing it, characterised in that the bearing structure comprises two projections (14) integrally formed on the inside of the corresponding half-member (2) and spaced apart and each having an eyelet (15) for the sun-visor shaft (6), the space between the projections (14) is used for receiving the spring, and the spring is a hat-shaped leaf spring (16) which has two flanges bearing against the inside of the half-member (2), two arms (19) adjoining the flanges at an angle and having through apertures (20) for the sun-visor shaft (6), and a web (21) which connects the arms (19) and has a bearing surface (22) which is bent towards the flanges (18) and abuts the sun-visor shaft (6).

2. A sun visor according to claim 1, characterised in that the bearing structure comprises integrally moulded components (17) for retaining the leaf spring (16).

3. A sun visor according to claim 1 or 2, characterised in that a flange (18) of the leaf spring (16) has a projecting spring tongue (25) which is cut and bent out of the plane of the flange so as to engage in an annular groove (26) on the sun-visor shaft (6).

4. A sun visor according to at least one of claims 1 to 3, characterised in that the flanges (18) of the leaf spring (16) each have a projecting end region (27) extending approximately parallel to the sun-visor shaft (6) and an adjacent portion (28) which bends away from the web (21), the portions (28) each merging via a bent part (29) into an arm (19) of the leaf spring (16).

5. A sun visor according to at least one of claims 1 to 4, characterised in that the arms (19) of the leaf spring (16) extend at an angle to the web (21) and the through openings (20) in the arms (19) of the leaf spring (16) are slots.

6. A sun visor according to at least one of claims 1 to 5, characterised in that the bearing surface (22) of the leaf spring (16) extends substantially parallel to the sun-visor shaft (6) and co-operates with a flat part (24) of the sun-visor shaft (6) so that the sun-visor body (1) is locked / held in an end position when inoperative.

7. A sun visor according to at least one of claims 1 to 6, characterised in that the bearing structure and the leaf spring (16) are covered by a second half-member (3) of the sun visor, preferably made of PP-particle foam,and the half-members (2, 3) are together surrounded by a plastics foil or textile sheet material or similar covering material (4).

## Revendications

1. Pare-soleil de véhicule automobile comportant un corps de pare-soleil (1) divisé en deux parties à peu près dans son plan médian dont au moins un demi-corps (2) est sous-forme d'une pièce en matière synthétique moulée par injection, en forme de coquille, qui présente une formation de palier pour la réception à une seule extrémité d'un axe de pare-soleil (6) et d'un ressort (16) chargeant radialement ce dernier, caractérisé en ce que la formation de palier se compose de deux talons de matière (14) formé sur le côté intérieur du demi-corps (2) correspondant, qui sont placés de façon espacée au voisinage l'un de l'autre, et chacun présentant un oeilletons de palier (15) pour recevoir l'axe de pare-soleil (6), en ce que l'espace entre les talons de matière (14) est utilisé pour recevoir le ressort (16), et en ce que le ressort (16) est un ressort à lame réalisé en forme de chapeau, qui présente deux brides (18) s'appuyant sur le côté intérieur du demi-corps (2), deux branches (19) s'y rattachant en formant un angle avec des orifices traversants (20) pour l'axe de pare-soleil (6), et un décrochement (21) reliant les branches (19) entre elles celui-ci étant formé d'une surface d'appui (22) recourbée dans la direction des brides (18) et s'appuyant sur l'axe de pare-soleil.

2. Pare-soleil selon la revendication 1, caractérisé en ce que la formation de palier comporte un élément de maintien (17) formé d'un seul tenant avec elle pour le ressort à lame (16)

3. Pare-soleil selon la revendication 1 ou 2, caractérisé en ce qu'une bride (18) du ressort à lame (16) comporte une languette de ressort (25) découpée et recourbée vers l'extérieur du plan de la bride pour s'enclencher dans une gorge annulaire (26) de l'axe de pare-soleil (1)

4. Pare-soleil selon au moins l'une des revendications 1 à 3, caractérisé en ce que les brides (18) du ressort à lame (16) comportent chacune une section d'extrémité (27) libre, à peu près parallèle à l'axe de pare-soleil (6) et une section (28) s'y rattachant recourbée à partir du décrochement (21), les sections (28) évoluant par une courbure (29) en chacune des branches (19) du ressort à lame (16).

5. Pare-soleil selon au moins l'une des revendications 1 à 4, caractérisé en ce que les branches (19) du ressort à lame (16) s'étendent obliquement dans la direction du décrochement (21) et en ce que les orifices traversants (20) dans les branches (19) du ressort à lame (16) ont la forme de trous oblongues.

6. Pare-soleil selon au moins l'une des revendications 1 à 5, caractérisé en ce que la surface d'appui (22) du ressort à lame (16) s'étend de façon pratiquement parallèle à l'axe de pare-soleil (6) et coopère par un méplat (24) de l'axe de pare-soleil (6), de telle sorte que le corps pare-soleil (1) soit soumis dans sa position de non-utilisation à un dispositif de maintien par encliquetage/encliquetage final.

7. Pare-soleil selon au moins l'une des revendications 1 à 6, caractérisé en ce que la formation de palier et le ressort à lame (16) sont recouverts par le second demi-corps de pare-soleil (3), se constituant avantageusement de mousse de particules de polypropylène, et en ce que les demi-corps pare-soleil (2, 3) sont entourés ensemble par une feuille de matière synthétique, d'un produit textile plat, ou d'une matière d'enrobage analogue (4).
